# EUROPEAN PATENT APPLICATION

(11) **EP 1 376 102 A1**
(43) Date of publication of application: **02.01.2004**
(21) Application number: 02254508.1
(22) Date of filing: 27.06.2002
(51) Int. Cl.: G01N 21/64, G01N 27/447

(54) **System for detecting the distribution of fluorophores**

(71) Applicant: Applied Scintillation Technologies Ltd., Harlow CM19 5BZ (GB)
(72) Inventor: Tyrrell, Glenn c/o Applied Scintillation Tech.Ltd, Harlow CM19 5BZ (GB); Creasey, Jonathan P Appl. Scintillation Tech.Ltd, Harlow CM19 5BZ (GB)
(74) Representative: Jones, Helen Marjorie Meredith

(57) **Abstract**

A method for observing the presence of at least one fluorophore in a test material using a detector comprises the steps:
a) allowing incident ultraviolet light to pass through an exchangeable wavelength conversion screen comprising a scintillator which absorbs light of ultraviolet wavelengths and emits light of a narrow band width λₛ₁-λₛ₂ whereby the transmitted light has wavelength in the range λₛ₁, to λₛ₂;
b) allowing transmitted light to pass into the test material which comprises a fluorophore which absorbs light at an excitation wavelength around a maximum λ_{dx}, in which λₛ₁ < λ_{dx} < λₛ₂, and emits light at a wavelength λ_{dm} whereby the fluorophore emits light at said wavelength λ_{dm}; and
c) detecting emitted light using a detector system which is sensitive to light of wavelength λ_{dm}.

The scintillator is suitably thulium doped yttrium vanadate and the fluorophore is preferably fluorescein.

## Description

The present invention relates to systems and methods for observing the distribution of fluorophores in gel sheets, such fluorophores being commonly used as probes for biological molecules.

Ultraviolet radiation has been found useful in bioscience laboratories, in particular for use in DNA research. Light boxes for generating ultraviolet light have been developed which emit light of a wavelength for stimulating fluorophores such as ethidium bromide and SBYR green , which intercalate between the strands of double stranded DNA and are used to identify the location of such DNA on separation gels. Black light (UV light without a visible component) is incident on the fluorophore, which subsequently emits light in the visible spectrum whereby the human eye or some other form of detector may detect the presence, intensity and distribution of the fluorophore in a gel sheet. Such light boxes are generally termed transilluminators.

Transilluminators are known with replaceable tubes for generating incident light of different wavelengths. This may allow selective detection of selected dyes in a gel containing more than one dye, wherein the excitation spectra of the dyes differ. For instance, transilluminators emitting at 312 nm and 380 nm are known.

Visible light boxes are also known, which allow detection of dyes, including fluorophores. There are also known UV transilluminators which have white light converters, comprising a sheet coated with a broad band emitting scintillator material. Such wavelength shifters convert light of UV wavelengths into white light. US-A-5,736,744 describes a wavelength conversion screen for use with a transilluminator which comprises a scintillator coating, but does not specify the nature of the scintillator coating. We have been producing a UV to white light converter which utilises a scintillator that consists of a blend of commercially available lamp phosphors that exhibit a range of accessible wavelengths that can be described using the well-known CIE (Commission Internationale d'Ecloirage) chromaticity diagram.

This type of phosphor screen is well described and documented. Specific examples that date back to the early 1950's include the Levy West TS75 and EMI radar screens. Screens applied to applications described in US-A-5736744 were manufactured by Levy West for Pfizer's research in the late 1950's.

in US-A-6,198,107, a system for use with a visible light transilluminator comprises a blue light source, a blue filter between the light source and the gel sheet, and an amber filter between the sheet and the detector, usually the human eye.

Typically a fluorophore has a characteristic broad band excitation curve, centred around an absorption maximum, and a similar, often partially overlapping, emission curve centred around an emission maximum. Often it may be desirable for two or more fluorophores to be included in a single gel. Where the fluorophores share similar emission curves but differing excitation curves, their differentiation requires the use of complex optical filters between the gel and the light source.

The introduction of techniques such as Fluorescence Resonance Energy Transfer (FRET) where there is a distance-dependent interaction between the electronic excited states of two dye molecules in which excitation is transferred from a donor molecule to an acceptor molecule without emission of a photon gives a requirement for narrow wavelength excitation sources. At present, the excitation must be provided by lasers but a system which allows a large area of a gel plate to be illuminated is complex and expensive.

The diversity of fluorescent probes is increasing, and techniques that demand specificity in the excitation of these dyes are desired.

A new system for observing the presence of at least one fluorophore in a test material to be used with a source of ultraviolet incident comprises
a) an exchangeable wavelength conversion screen comprising a scintillator which absorbs light of ultraviolet wavelengths and emits light of a narrow bandwidth λ_{S1} to λ_{S2};
b) a test material comprising at least one fluorophore positioned such that light passing through the wavelength conversion screen is incident on the material, the fluorophore having an excitation wavelength λ_{dX,} in which λ_{S1} < λ_{dx}< λ_{S2} and which emits lights at a wavelength λ_{dm} which is detectable by a detector.

A new method according to the invention for observing the presence of at least one fluorophore in a test material using a detector comprises the steps:
a) allowing incident ultraviolet light to pass through an exchangeable wavelength conversion screen comprising a scintillator which absorbs light of ultraviolet wavelengths and emits light of a narrow band width λ_{S1} to λ_{S2} whereby the transmitted light has wavelength in the range λ_{S1} to λ_{S2};
b) allowing transmitted light to pass into the test material which comprises a fluorophore which absorbs light at an excitation wavelength around a maximum λ_{dX}, in which λ_{S1} < λ_{dX} < λ_{S2}, and emits light at a wavelength λ_{dm} whereby the fluorophore emits light at said wavelength λ_{dm}; and
c) detecting emitted light using a detector system which is sensitive to light of wavelength λ_{dm}.

In the present invention, the detector system should be capable of detecting the light of wavelength λ_{dm} in the presence of other light emitted from the test material. A wavelength specific detector, which is sensitive only to light of wavelength λ_{dm} may be adequate to identify the presence of the fluorophore, even where light of other wavelengths is passed from the test material. In some embodiments, however, a filter is provided between the test material and the detector, which filters out substantially all light detectable by the detector having a wavelength below a value λ_{f}, wherein λ_{S2} <λ_{f} < λ_{dm}.

Although it is possible for light to be detected from the same side of the test material as the incident light, it is preferred that the light be transmitted through the test material. Thus the test material should be transparent to light at the excitation wavelength for the fluorophore.

The invention is of particular value where the test material is in the form of a sheet, for instance of a gel material, on which biological molecules have been separated. The system is arranged such that patterns of fluorescence emitted by the fluorophore in a gel sheet are viewable by the detector. The invention is of particular value where the detector is the human eye. However in other embodiments, the detector may comprise pixellated array detectors such as charge coupled devices (CCD's), complimentary metal oxide semiconductors (CMOS), amorphous silicon active matrices and flexible polysilicon flat panels. Further embodiments may use any of the diversity of scanner technologies which are available and also photographic film methods.

Where the system for use in the invention comprises a transilluminator, that is a device which allows passage of light through the test material, the detector is generally the human eye. The transilluminator may be a standard light box provided with ultraviolet light sources generating one or several different wavelengths.

In the invention, the scintillator in the wavelength conversion screen emits light of a narrow bandwidth, defined as being bounded by λ_{S1} and λ_{S2}. The conventional description of a scintillator emission peak is to define the position of maximum emission and also its full width half maximum (FWHM). The excitation wavelength of the fluorophore should be within the band at which the intensity of light emitted by the fluorophopore is substantial. The intensity of light emitted by the fluorophore is a combination of the quantum efficiency of the scintillator and the position of the emitted scintillation within the absorption envelope of the fluorophore. Combined with potential high sensitivity of modern detectors (which may be cooled to reduce dark current noise), allows specific excitation in the band λ_{S1} and λ_{S2}. λ_{S1} and λ_{S2} may be narrower than the FWHM of the scintillator or may encompass and extend beyond the FWHM. Generally the intensity of the emissions outside the FWHM envelope is too low for efficient excitation of the dye and λ_{S2}-λ_{S1} defines the FWHM. Preferably the scintillator has substantially no tail of emissions at lower energy. Preferably the FWHM is less than 100 nm, and preferably λ_{S2}-λ_{S1} is less than 100 nm. Both are preferably less than 75 nm. The FWHM of a scintillation depends on the scintillation centre and also the matrix, as is known in the art.

The wavelength range λ_{S1} to λ_{S2} may be in the ultraviolet range or the visible light range. A range of available dyes, defined more fully below, indicates that the maximum excitation wavelength for the fluorophore, is in the range 340 to 720 nm, that is covering the entire visible spectrum and the lower energy end of the ultraviolet range. In the invention a range of scintillators may be used together, or preferably individually, in conversion screens to provide excitation wavelengths suitable for use across the range of dyes, as further described below. The absorption envelope for the dye may be relatively wide, e.g. having a FWHM of more than 50 nm. The wavelength λ_{dX} may be inside the FWHM, or outside, provided that the light emitted by the dye at the wavelength λ_{dm} is of high enough intensity.

In the invention, detection of fluorescent emissions from the fluorophore is optimised where there is a large difference between the optimum excitation wavelength and the wavelength at which the intensity is highest of the emitted light and/or where the bandwidths of each are sufficiently narrow such that there is little overlap between the excitation and emission spectra. Selection of a suitable scintillator for combination with a specific fluorophore requires a comparison of the emission spectrum of the scintillator with the excitation spectrum of the fluorophore. The fluorophore should absorb light of sufficient intensity in the excitation spectrum for the fluorophore to allow adequate levels of fluorescence to be achieved. It is preferred that there be minimum overlap between the emission spectrum of the scintillator and the emission spectrum of the fluorophore. This allows a detection system to be devised which either requires no filters or, generally, requires selection of a filter with ease, having a cut off for light to which the detector would otherwise be sensitive, having a wavelength below that of the wavelength of emitted light from the fluorophore (λ_{dm}), but above the excitation wavelength for the fluorophore, and the wavelength of substantially all the light emitted by the fluorophore. Although such a filter may be transparent to light of lower wavelengths, to which the detector is not sensitive, such as ultraviolet light to which visible light detectors are not sensitive, it is preferred that the filter be wholly opaque to wavelengths below the cut off value.

In the invention, the wavelength conversion screen must be exchangeable, that is it must be removable from the path of incident light and replaceable therein. The screen is thus a device separate from the light source and any housing associated therewith. Generally the wavelength conversion screen is carried in a holder into which it may be placed and from which it may subsequently be removed. The holder generally allows a selected screen from a range of screens to be carried in the effective position. Thus the system may comprise more than one conversion screens, each comprising different scintillators or scintillator mixtures, capable of absorbing UV light, but having differing emission spectra. Preferably each such wavelength conversion screen emits light of a narrow waveband. It may be desirable to provide, in addition, a broadband wavelength conversion screen capable of converting, for instance, UV light into white light or UV into broadband blue light.

By allowing selection from a range of wavelength conversion screens, the system of the invention may be used with more than one type of fluorophore, each of which has a different excitation spectrum. The different fluorophores may emit at the same, or different wavelengths. Where they emit the same wavelengths, this enables simple detectors to be used which are sensitive only to that emitted wavelength.

The system may comprise more than one light filter, for positioning between the test material and the detector. Different filters may have cut off wavelengths at selected values, to be suitable for use with different fluorophores. Thus where the test material comprises two fluorophores, which absorb at the same wavelength but emit at different wavelengths, sequential use of the filters having appropriately selected cut off wavelengths may allow observation of either one, or both of the dyes and, potentially by subtraction, to allow determination of the location of the other (where the filters allow transmission of wavelengths above the cut off wavelength and have no higher wavelength cut off).

The scintillator is a luminescent material which is based on inorganic ion, and an organic or inorganic matrix. The scintillator may comprise a conventional phosphor, single crystal scintillators, luminescent glasses, as well as inorganic ion based organic chelate materials. The active luminescent centre for these materials determines the wavelength of maximum emission intensity. It is likely to be a lanthanide (rare earth) or transition metal ion, which has a narrow line width emission that resides within the absorption envelope of the fluorophore. Selection of an appropriate matrix for the centre may be made by a person skilled in the art and may depend upon the desired line width (λ_{S2}-λ_{S1} and FWHM).

The screen itself may act as a filter for radiation below a specified wavelength. This wavelength may, for instance, be below the emission spectrum of the scintillator, and be useful therefore to screen out ultraviolet radiation and minimise risk to the environment or damage to the sample. The filter which is part of the screen may comprise any commercially available filters, e.g. Lee 183 or P7703, in order to adjust the FWHM width of the primary emission and any low intensity satellite emission peaks that may occur in these scintillators.

The system of the invention preferably comprises a filter interposed between the scintillator and the test material, which filters out light above a specified wavelength, that is low energy light. Thus the filter should prevent light having a wavelength the same as that of the emission spectrum of the fluorophore reaching the test material. The low energy wavelength filter prevents background readings on the detector.

The scintillators may comprise a homogeneous film of material or, preferably, comprises particles having dimensions from about 10 nm up to 50pm. The use of particulate materials, for instance scintillators themselves, in the screen may allow for useful diffusion of radiation during passage through the screen such that the non-uniform light intensity from the transilluminator UV lamps is homogenised.

The following table shows a list of available fluorophore dyes, showing their excitation and emission wavelengths (maximum of spectra). Also shown is a list of suitable luminescent centres which would, in scintillators, be useful in combination with the respective dyes. The table also shows a suitable matrix to include in the scintillation. A variety of matrices are known to be useful for Ce³⁺/Tb³⁺, Tb³⁺ alone, and Mn⁴⁺ alone such as CeMgAl₁₁O₁₉, Y₂O₂S Gd₂O₂S, LaPO₄, Y₅SiO₅, GdMgB₅O₁₀, etc.

**Table 1**

| Fluorophore label | Excitation λ (nm) | Emission A (nm) | Active luminescent centre in scintillator | Emission λ (nm) |
|---|---|---|---|---|
| Pyrene | 340 | 370 | Tl+ (CaZn)₃(PO₄)₂ | 310 |
| AMCA | 350 | 440 | Eu²⁺ (SrB₄0₇) | 360 |
| Cascade Blue | 400 | 420 | Eu²⁺ ((SrMg)₂P₂O₇) | 394 |
| Diethylaminocoumarin | 410 | 475 | Eu²⁺ ((SrMg)₂P₂O₇) | 394 |
| Fluoroscein (FAM) | 495 | 520 | Tm³⁺ (YVO₄) | 470 |
| BODIPY FL | 505 | 515 | | |
| SYBR Green 1 | 495 | 520 | Tm³⁺ (YVO₄) | 470 |
| SYBR Green I | 490 | 510 | Tm³⁺ (YVO₄) | 470 |
| Acridine Orange | 490 | 530 | Tm³⁺ (YVO₄) | 470 |
| Rhodamine 110 | 495 | 520 | Tm³⁺ (YVO₄) | 470 |
| Oregon Green 488 | 495 | 520 | Tm³⁺ (YVO₄) | 470 |
| Alexa 488 | 490 | 520 | Rm³⁺ (YVO₄) | 470 |
| Rhodamine Green | 505 | 530 | Mn²⁺ (MgGa₂O₄) | |
| Eosin | 520 | 545 | Mn²⁺ (MgGa₂O₄) | 510 |
| Alexa 532 | 525 | 550 | Mn²⁺ (MgGa₂O₄) | 510 |
| 2',7'-Dimethoxy-4',5'-dichloro-6-carboxy fluoroscein (JOE) | 525 | 550 | Mn²⁺ (MgGa₂O₄) | 510 |
| Naphthofluorocein | 510 | 560 | Mn²⁺ (MgGa₂O₄) | 510 |
| Alexa | 555 | 570 | Ce³⁺, Tb³⁺ Tb³⁺ | 543 |
| Ethidium bromide | 545 | 610 | Ce³⁺, Tb³⁺ Tb³⁺ | 543 |
| Cy3 | 550 | 570 | Ce³⁺, Tb³⁺ Tb³⁺ | 543 |
| Tetramethylrhodamine | 550 | 570 | Ce³⁺, Tb³⁺ Tb³⁺ | 543 |
| Rhodamine 6G | 530 | 550 | Mn²⁺ (MgGa₂O₄) | |
| Alexa 568 | 575 | 600 | Dy³⁺ (YVO₄) | 570 |
| Lissamine Rhodamine, Rhodamine Red | 570 | 590 | Dy³⁺ (YVO₄) | 570 |
| Carboxy-X-rhodamine (ROX) | 585 | 610 | Dy³⁺ (YVO₄) | 570 |
| Texas Red | 595 | 615 | Dy³⁺ (YVO₄) Eu³⁺ (Y₂O₂S, YVO₄, Gd₂O₂S) lowdoping concn | 570 590 |
| BODIPY TR | 595 | 625 | Dy³⁺ (YVC₄) Eu³⁺ (Y₂O₂S_{,} YV0_{4,} Gd₂O₂S) lowdoping concn | 570 590 |
| BODIPY 630/650 | 630 | 650 | Eu³⁺ (Y₂O₂S YVO₄, Gd₂O₂S) | 620 |
| BODIPY 650/665 | 650 | 670 | Eu³⁺ (Y₂O₂S_{,} YVO₄, Gd₂O₂S) | 620 |
| Cy5 | 650 | 670 | Eu³⁺ (Y₂O₂S, YVO₄, Gd₂O₂S) | 620 |
| Rhodamine 800 | 700 | 715 | Mn⁴⁺ | 655 |
| Oxazine 750 | 690 | 699 | Mn⁴⁺ | 655 |

As will be seen above, one suitable combination of scintillator and fluorophore is thulium-doped yttrium vanadate, in combination with fluorescein. The fluorophore has an excitation curve centred at 498 nm with a FWHM of 60 nm. The Tm³⁺ ion produces a narrow luminescent peak at 470 nm which is sufficiently efficient to excite the low wavelength side of the fluorophore's excitation curve, but is sufficiently distant from the emission spectrum of fluorescein to prevent a high background signal. Although it may be unnecessary, a low energy wavelength filter may be interposed between the scintillator and the gel to minimise background signal.

The screen generally comprises a sheet of transparent material, such as glass, provided with a coating of a scintillator and an overlay of a protective material, generally in sheet form. Such a screen may for instance be made by coating a sheet of glass with a coating composition comprising a dispersion of thulium-doped yttrium vanadate in a liquid vehicle using a doctor blade or other system suitable for provision of a uniform coating. The solvent is evaporated, then a protective film applied over the scintillator layer, for instance using a solvent welding process in which a small amount of solvent is sprayed onto the film before contact with the scintillator coating. The coating weight of scintillator is, for instance, in the range 2.5 to 50 mg cm⁻² The protective sheet may comprise a low energy filter. Such filters are known in the art

An example of a suitable system for use with a UV light box is illustrated in the accompanying drawings in which:

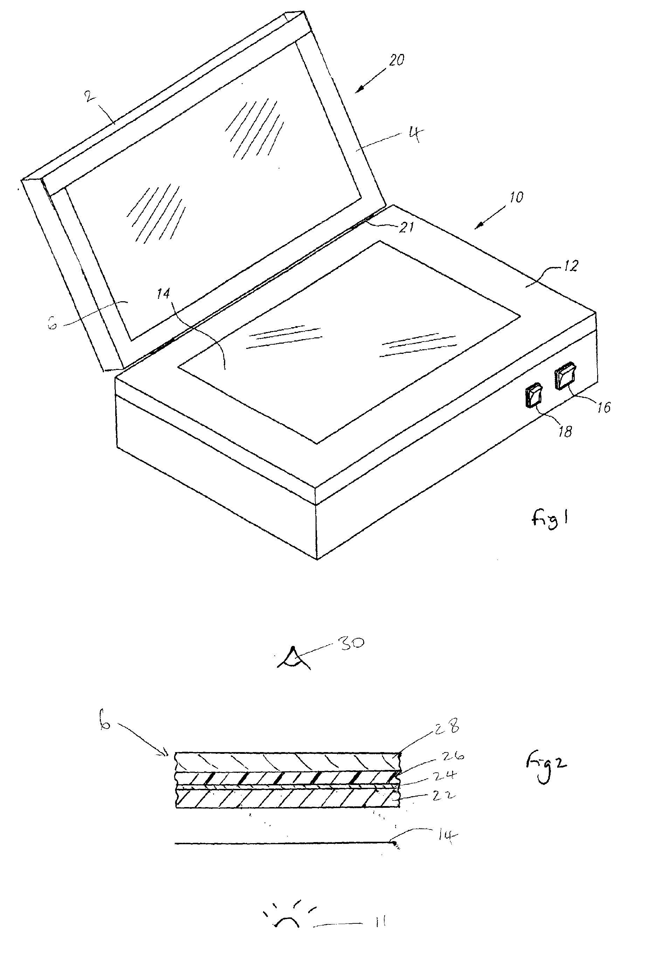

Figure 1 is a perspective view of a light box having a hinged holder for a wavelength conversion screen;
Figure 2 is a section through a part of the light box with wavelength conversion screen in place and a sheet of test gel; and
Figure 3 shows various spectra of the emission and excitation wavelengths of the components in the system.

A light box generally indicated at 10 has a frame 12 surrounding window 14 for transmission of ultraviolet light from a source. A lid 20 is connected along one edge to the top of the light box by hinges 21. At the edge 2 distant from the hinges 21, there is a slot allowing access between inner and outer portions of a frame 4 which is of approximately the same size as frame 12 of the light box. Into the slot 2 may be slid a screen assembly 6 which, when the cover 20 is closed, covers the entire window 14 of the light box.

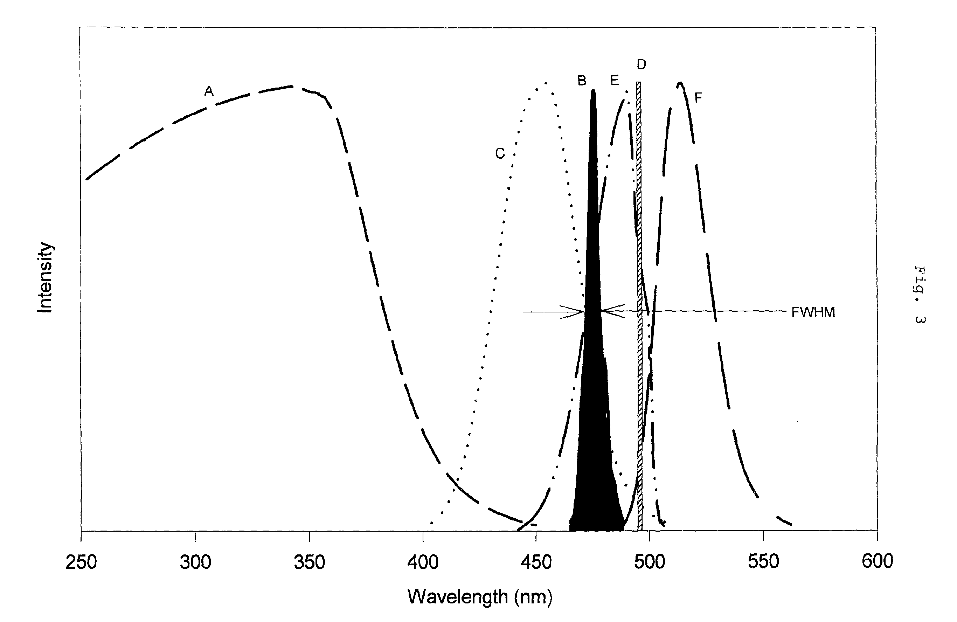

As further shown in the schematic diagram of figure 2, a light source 11, which generally comprises mercury vapour tubes, optionally coated with phosphor coating to allow the source to have a broad band emission, is located under the window 14. When the lid is closed onto the light box, the screen assembly 6 will be parallel with the window 4. The assembly 6 comprises a transparent substrate 22, a layer of phosphor 24 and a protective film 26. The sheet gel under test, for instance formed of agarose or other polymer generally used in the biosciences laboratory, 28 is laid directly on the protective film 26. In this case protective film 26 comprises also a low energy filter. UV light passes from the source, through the window 14 and the substrate 22 into the scintillator coating 24. This converts the wavelength from the low UV values to a narrow band having a higher wavelength. The light is transmitted through the protective layer which filters out any low energy, high wavelength radiation which might otherwise interfere as background at the detector.

The gel 28 comprises a fluorophore which is excited by radiation of the wavelength emitted by the scintillator. The fluorophore absorbs this light and emits it at a longer wavelength to which the detector 30 is sensitive.

An alternative arrangement of the screen and filter would be in a free standing device comprising a frame, to be laid directly on the window 4 of the transilluminator.

In Figure 3 there are shown the various spectra with normalised intensities. A is the excitation spectrum of the scintillator, in this example thulium-doped yttrium vanadate. The excitation spectrum encompasses the spectrum of the mercury vapour lamp with its as-supplied phosphor coating. B is the narrow band emission spectrum of the scintillator, centred in this case around 470 nm having a FWHM as shown. The upper and lower wavelengths at half the maximum intensity here correspond to A51 and λ_{S2}. For comparison, curve C is a typical emission spectrum of a known broad band blue phosphor coating such as BAM blue.

Curve E is the absorption envelope of a typical dye such as fluorescein. Wavelengths within this envelope excite the fluorophore, which subsequently emits at the wavelength of curve F. Also shown is the cut off value for the low energy filter used between the scintillator and the gel, at D (also known as a low wavelength band pass filter).

## Claims

1. A system for observing the presence of at least one fluorophore in a test material to be used with a source of ultraviolet incident light comprising
a) an exchangeable wavelength conversion screen comprising a scintillator which absorbs light of ultraviolet wavelengths and emits light of a narrow bandwidth λ_{S1} to λ_{S2},
b) a test material comprising at least one fluorophore positioned such that light passing through the wavelength conversion screen is incident on the material, the fluorophore having an excitation wavelength λ_{dX}, in which λ_{S1} <λ_{dX} < λ_{S2}, and which emits lights at a wavelength λ_{dm} which is detectable by a detector.

2. A system according to claim 1 comprising the source of U.V. light.

3. A system according to claim 2 in which the source is a mercury vapour lamp.

4. A system according to claim 2 or claim 3 in which the light source is a transilluminator and wherein the wavelength conversion screen, and the test material are arranged sequentially on the transilluminator whereby light passes through each of them.

5. A system according to any preceding claim wherein the band width (i.e. λ_{S2} - λ_{S1}) is less than 100 nm preferably in the range 10 to 75 nm.

6. A system according to any preceding claim wherein λ_{d} is in the range 370 - 720 nm.

7. A system according to any preceding claim wherein λd (i.e. λ_{d} - λ_{S2}) is less than 100 nm.

8. A system according to claim 1 in which the fluorophore/scintillator combinations are selected from the combinations in Table 1.

9. A system according to any preceding claim in which the wavelength conversion screen absorbs lights of wavelength less than λ_{S1} whereby substantially no light of such wavelengths is incident on the gel sheet.

10. A system according to any preceding claim in which the test material has at least two fluorophores distributed in it which have absorption maxima in the range λ_{S1} to λ_{S2} and which have different emission wavelengths λ_{d}.

11. A system according to any of claims 1 to 9 in which the test material has a second fluorophore distributed in it which has an absorption envelope λ_{db} outside the range λ_{S1} to λ_{S2} and which comprises a second wavelength conversion screen which may replace the said wavelength conversion screen in the holder and which comprises a second phosphor which absorbs light of UV wavelength and emits light at a higher wavelength in the range λ_{Sb1} to λ_{Sb2}, the phosphor selected such that λ_{Sb1} < λ_{db} <_{Sb2-}

12. A system according to claim 11 in which the absorption maximum within λ_{db} is within about 10 nm of λ_{dm}.

13. A system according to any preceding claim in which the detector is the human eye.

14. A system according to any of claims 1 to 12 in which the detector is an automated device.

15. A method for observing the presence of at least one fluorophore in a test material using a detector comprises the steps:
a) allowing incident ultraviolet light to pass through an exchangeable wavelength conversion screen comprising a scintillator which absorbs light of ultraviolet wavelengths and emits light of a narrow band width λ_{S1}-λ_{S2} whereby the transmitted light has wavelength in the range λ_{S1} to λ_{S2};
b) allowing transmitted light to pass into the test material which comprises a fluorophore which absorbs light at an excitation wavelength around a maximum λ_{dX}, in which λ_{S1} <λ_{dX} < λ_{S2}, and emits light at a wavelength λ_{dm} whereby the fluorophore emits light at said wavelength λ_{dm}; and
c) detecting emitted light using a detector system which is sensitive to light of wavelength λ_{dm}.
